(19) Europäisches Patentamt
European Patent Office
Office européen des brevets

(11) Veröffentlichungsnummer: **0 277 529 B1**

(12) **EUROPÄISCHE PATENTSCHRIFT**

(45) Veröffentlichungstag der Patentschrift: **07.04.93**

(51) Int. Cl.$^5$: **C09B 67/22**, D06P 1/18

(21) Anmeldenummer: **88100576.3**

(22) Anmeldetag: **16.01.88**

Die Akte enthält technische Angaben, die nach dem Eingang der Anmeldung eingereicht wurden und die nicht in dieser Patentschrift enthalten sind.

# (54) Mischungen von Monoazofarbstoffen.

(30) Priorität: **02.02.87 DE 3702967**

(43) Veröffentlichungstag der Anmeldung:
**10.08.88 Patentblatt 88/32**

(45) Bekanntmachung des Hinweises auf die Patenterteilung:
**07.04.93 Patentblatt 93/14**

(84) Benannte Vertragsstaaten:
**CH DE FR GB IT LI**

(56) Entgegenhaltungen:
**DE-A- 3 234 186**
**FR-A- 2 179 264**
**GB-A- 2 108 141**

(73) Patentinhaber: **CASSELLA Aktiengesellschaft**
**Hanauer Landstrasse 526**
**W-6000 Frankfurt am Main 61(DE)**

(72) Erfinder: **Bühler, Ulrich, Dr.**
**Kastanienweg 8**
**W-8755 Alzenau(DE)**
Erfinder: **Hofmann, Klaus**
**Meerholzerstrasse 50**
**W-6000 Frankfurt/Main 61(DE)**
Erfinder: **Hähnke, Manfred, Dr.**
**Behringstrasse 13**
**W-6233 Kelkheim(DE)**

(74) Vertreter: **Urbach, Hans-Georg, Dr. et al**
**Hanauer Landstrasse 526**
**W-6000 Frankfurt am Main 60 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 277 529 B1

## Beschreibung

Die Erfindung betrifft Mischungen von Monoazofarbstoffen, die dadurch gekennzeichnet sind, daß sie aus einem oder mehreren Farbstoffen der Formel I

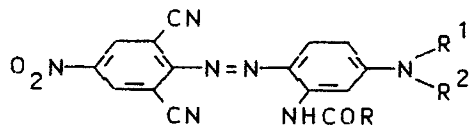

(I)

und einem oder mehreren Farbstoffen der Formel II

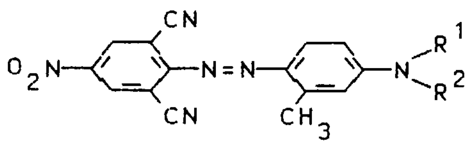

(II)

worin
$R^1$ und $R^2$ unabhängig voneinander lineares oder verzweigtes Alkyl mit 1 bis 6 C-Atomen und
R lineares oder verzweigtes Alkyl mit 1 bis 3 C-Atomen bedeuten, bestehen.

Die Erfindung betrifft auch Verfahren zur Herstellung der erfindungsgemäßen Farbstoffmischungen sowie ihre Verwendung zum Färben und Bedrucken von hydrophoben Fasermaterialien.

Es ist bereits bekannt, daß Gemische aus mindestens zwei verschiedenen Einzelfarbstoffen der Formel I verbesserte färberische Eigenschaften im Vergleich zu den Einzelfarbstoffen besitzen (vergl. DE-AS 22 34 465, EP 93 935 und DE-OS 33 47 572). Farbstoffmischungen, die mindestens einen Farbstoff mit einer 3-Acylaminoanilin- und mindestens einen Farbstoff mit einer 3-Alkylaminoanilin- Kupplungskomponente enthalten, sind bereits aus der GB 2 108 141 bekannt.

Es wurde nun überraschenderweise gefunden, daß die erfindungsgemäßen Mischungen wesentlich verbesserte färberische Eigenschaften gegenüber den Einzelfarbstoffen und zum Teil auch gegenüber den Mischungen der DE-AS 22 34 465, EP 93 935 und GB 2 108 141 besitzen.

Die erfindungsgemäßen Farbstoffmischungen bestehen aus einem oder mehreren Farbstoffen der Formel I und einem oder mehreren Farbstoffen der Formel II. Bevorzugt sind erfindungsgemäße Farbstoffmischungen, die aus je einem oder zwei Farbstoffen der Formeln I und II bestehen.

Bevorzugt sind auch Farbstoffmischungen, die aus Farbstoffen der Formeln I und II bestehen, wobei $R^1$ und $R^2$ lineares Alkyl mit 2 bis 4 C-Atomen und R lineares oder verzweigtes Alkyl mit 1 bis 3 C-Atomen bedeuten. Besonders bevorzugt sind Farbstoffmischungen, die aus Farbstoffen der Formeln I und II bestehen, wobei $R^1$ und $R^2$ in einem Farbstoff jeweils identisch sind und n-Propyl und insbesondere Ethyl bedeuten, und die einen oder mehrere Farbstoffe der Formel I enthalten, in denen R gleich Methyl, i-Propyl und insbesondere n-Propyl ist. Weiter sind bevorzugte Farbstoffmischungen solche, die mindestens 2 Farbstoffe der Formel I enthalten, bei denen die Reste R unterschiedlich sind und zwei dieser Farbstoffe für R die Kombinationen $CH_3$/i-$C_3H_7$, $C_2$-$H_5$/i-$C_3H_7$, $C_2H_5$/n-$C_3H_7$, i-$C_3$-$H_7$/n-$C_3$-$H_7$ und insbesondere $CH_3$/n-$C_3H_7$ haben, wobei die Reste $R^1$ und $R^2$ aller Farbstoffe dieser Mischungen für lineares Alkyl mit 2 bis 4 C-Atomen stehen, bevorzugt an jedem einzelnen Farbstoff untereinander gleich und ganz besonders bevorzugt Ethyl sind.

Weiter sind bevorzugt Farbstoffmischungen, die mindestens 2 Farbstoffe der Formel I enthalten, bei denen die Reste R jeweils gleich sind und Ethyl, n-Propyl oder i-Propyl und insbesondere Methyl bedeuten, und die Reste $R^1$ und $R^2$, die bevorzugt in jedem einzelnen dieser Farbstoffe gleich sind, sich von Farbstoff zu Farbstoff unterscheiden und die Kombinationen Ethyl/n-Butyl, Propyl/N-Butyl und insbesondere Ethyl/n-Propyl haben.

Ganz besonders bevorzugt sind die Mischungen, die den Farbstoff der Formel II mit $R^1$ = $R^2$ = Ethyl sowie die Farbstoffe der Formel I mit $R^1$ = $R^2$ = Ethyl und R = Methyl bzw. n-Propyl oder die Farbstoffe der Formel I mit R = Methyl und $R^1$ = $R^2$ = Ethyl bzw. n-Propyl oder insbesondere den Farbstoff der Formel I mit $R^1$ = $R^2$ = Ethyl und R = n-Propyl enthalten.

In den erfindungsgemäßen Farbstoffmischungen kann das Verhältnis der verschiedenen Farbstoffe der allgemeinen Formeln I und II in relativ weiten Grenzen variieren. Im allgemeinen beträgt der Mindestgewichtsanteil einer Komponente 10 % und der maximale Gewichtsanteil 90 %. Bei Farbstoffmischungen, die nur aus zwei Farbstoffen der allgemeinen Formeln I und II bestehen, ist ein Mengenverhältnis von 70/30 bis 30/70 bevorzugt, d.h. der Gewichtsanteil eines Farbstoffs beträgt 30 bis 70 %.

Die Einzelfarbstoffe der Formeln I und II sind bekannt und z.B. in der DE-PS 17 94 402 und der Europäischen Patentschrift 36 512 beschrieben.

Die erfindungsgemäßen farbstoffmischungen können nach verschiedenen Verfahren hergestellt werden:

1. Durch Mischen der getrennt hergestellten und getrennt formierten Einzelfarbstoffe. Dieser Mischprozeß erfolgt in geeigneten Mischern wie z.B. Taumelmischern.

2. Durch Diazotierung und gemeinsame Kupplung, dadurch gekennzeichnet, daß man ein Amin der Formel III

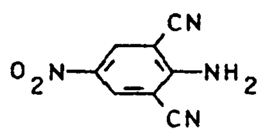

(III)

diazotiert und auf eine Mischung aus jeweils mindestens einer Kupplungskomponente der Formeln IV bzw. V

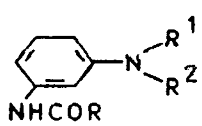

(IV)

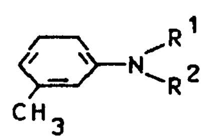

(V)

in denen $R^1$, $R^2$ und R unabhängig voneinander die oben angegebenen Bedeutungen haben, kuppelt. Die Zusammensetzung der Mischung der Kupplungskomponenenten wird dabei so gewählt, daß erfindungsgemäße Farbstoffmischungen entstehen. Die Diazotierung und Kupplung werden dabei in an sich bekannter Weise durchgeführt, wie sie für die Herstellung von Einzelfarbstoffen üblich und z.B. in der Tschechischen Patentschrift 164 657 beschrieben sind. Die so hergestellten Farbstoffmischungen werden anschließend gemeinsam formiert.

Vorzugsweise 3.: Durch gemeinsamen Cyanaustausch, dadurch gekennzeichnet, daß man in Farbstoffmischungen, die aus mindestens einem Farbstoff der Formel VI und mindestens einem Farbstoff der Formel VII

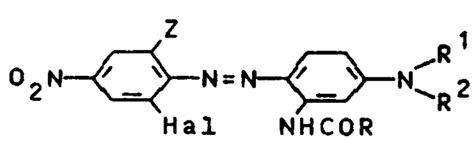

(VI)

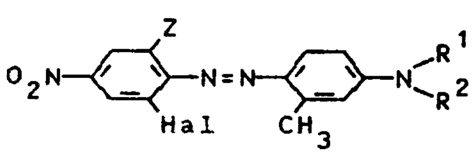

(VII)

bestehen, in denen Z für Cyan oder Halogen und Hal für Halogen, vorzugsweise Brom, steht und $R^1$, $R^2$ und R die oben angegebenen Bedeutungen haben, in an sich bekannter Weise Halogen gegen Cyan austauscht, wie es z.B. in der GB-PS 1 125 685 für Einzelfarbstoffe beschrieben ist. Die Zusammensetzung der Mischung der Farbstoffe der Formeln VI und VII wird dabei so gewählt, daß erfindungsgemäße Farbstoffmischungen entstehen.

Die Mischung der Farbstoffe der Formeln VI und VII kann dabei durch Mischen der Einzelfarbstoffe der Formeln VI und VII hergestellt werden. Sie kann jedoch auch erhalten werden, indem man eine Diazokomponente der allgemeinen Formel VIII

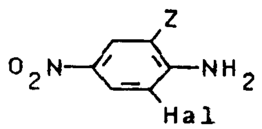

(VIII)

in der Z für Cyan oder Halogen und Hal für Brom oder Chlor und vorzugsweise Z und Hal für Brom stehen, diazotiert und auf eine Mischung der Kupplungskomponenten der allgemeinen Formeln IV und V kuppelt.

Vorzugsweise 4.: Durch gemeinsame Formierung der getrennt hergestellten Einzelkomponenten.

Diese gemeinsame Formierung ist dadurch gekennzeichnet, daß eine Farbstoffmischung aus jeweils mindestens einem Farbstoff der allgemeinen Formeln I und II in Gegenwart von Dispergiermitteln in geeigneten Mühlen, wie z.B. Kugel- oder Sandmühlen, gemahlen und, wenn eine pulverförmige Farbstoff-Formierung hergestellt werden soll, anschließend sprühgetrocknet wird.

Geeignete Dispergiermittel sind z.B. anionische oder nichtionische Dispergiermittel, die auch gemeinsam eingesetzt werden können. Anionische Dispergiermittel sind z.B. Kondensationsprodukte aus aromatischen Sulfonsäuren und Formaldehyd, insbesondere Kondensationsprodukte aus Alkylnaphthalinsulfonsäuren und Formaldehyd, Kondensationsprodukte aus gegebenenfalls substituiertem Phenol mit Formaldehyd und Natriumbisulfit, Alkalimetallsalze von Kondensationsprodukten aus gegebenenfalls substituiertem Phenol, Naphthalin- bzw. Naphtholsulfonsäuren, Formaldehyd und Natriumbisulfit, Alkalimetallsalze von Kondensationsprodukten aus gegebenenfalls substituierten Phenolsulfonsäuren, Formaldehyd und Harnstoff sowie Alkalimetallsalze von Ligninsulfonsäuren; Alkyl- oder Alkyl-aryl-sulfonate, sowie Alkyl-aryl-polyglykolethersulfate. Nichtionische Dispergiermittel oder Emulgatoren sind z.B. Umsetzungsprodukte von Alkylenoxiden, wie z.B. Ethylen-oder Propylenoxid mit alkylierbaren Verbindungen, wie z.B. Fettalkoholen, Fettaminen, Fettsäuren, Phenolen, Alkylphenolen, Arylalkylphenolen, Arylalkylarylphenolen und Carbonsäureamiden, wie z.B. Anlagerungsprodukte von 5 bis 10 Ethylenoxid-Einheiten an $C_8$-$C_{10}$-Alkylphenole.

Die Mahlung erfolgt bei Temperaturen zwischen 10 und 90 °C, vorzugsweise bei 30 bis 60 °C. Bei der gemeinsamen Formierung getrennt hergestellter Einzelkomponenten ist die gemeinsame Mahlung bei Temperaturen über 30 °C vorteilhaft. Die Farbstoffteilchen werden dabei mechanisch so weit zerkleinert, daß eine optimale spezifische Oberfläche erreicht wird und die Sedimentation des Farbstoffs möglichst gering ist. Die Teilchengröße der Farbstoffe liegen im allgemeinen zwischen 0,5 und 5 µm, vorzugsweise bei etwa 1 µm.

Es ist vorteilhaft, die getrennt hergestellten Einzelkomponenten der Farbstoffmischung vor der gemeinsamen Mahlung einer gemeinsamen thermischen Behandlung zu unterwerfen. Diese thermische Behandlung ist dadurch gekennzeichnet, daß man die Einzelkomponenten der Farbstoffmischung, gegebenenfalls unter Druck, in Wasser eine halbe bis mehrere Stunden auf Temperaturen von 70 bis 150 °C, vorzugsweise 90 bis 130 °C, erhitzt und wieder abkühlt. Dieses Erhitzen erfolgt vorteilhaft in Gegenwart eines oder mehrerer Dispergiermittel oder eines organischen Lösungsmittels. Solche Lösungsmittel sind zum Beispiel Methanol, Ethanol, Dimethylformamid oder Dimethylsulfoxid, vorzugsweise jedoch in Wasser wenig lösliche Lösungsmittel wie Toluol, Chlorbenzol, 1.2-Dichlorbenzol oder Butylacetat. Diese Lösungsmittel werden nach der thermischen Behandlung wieder abdestilliert.

Eine bevorzugte Vorbehandlung der Einzelkomponenten der Farbstoffmischung vor der gemeinsamen Mahlung ist das gemeinsame Lösen der Einzelkomponenten in einem organischen Lösungsmittel oder Lösungsmittelgemisch mit anschließendem Auskristallisieren oder Ausfällen, Isolieren, z.B. durch Filtration und Abtrennen von Lösungsmittelresten, z.B. durch Waschen.

Die so erhaltenen Farbstoffdispersionen können sehr vorteilhaft zum Ansatz von Druckpasten und Färbeflotten verwendet werden. Besondere Vorteile bieten sie z.B. bei den Kontinue-Verfahren, bei denen durch kontinuierliche Farbstoff-Einspeisung in die laufende Apparatur die Farbstoffkonzentration der Färbeflotten konstant gehalten werden muß.

Für gewisse Anwendungsbereiche werden Pulvereinstellungen bevorzugt. Diese Pulver enthalten der Farbstoff, Dispergiermittel und andere Hilfsmittel, wie z.B. Netz-, Oxydations-, Konservierungs- und Entstaubungsmittel.

Ein bevorzugtes Herstellungsverfahren für pulverförmige Farbstoffzubereitungen besteht darin, daß den oben beschriebenen flüssigen Farbstoffdispersionen die Flüssigkeit entzogen wird, z.B. durch Vakuumtrocknung, Gefriertrocknung, durch Trocknung auf Walzentrocknern, vorzugsweise aber durch Sprühtrocknung.

Die Farbstoffgehalte der flüssigen Farbstoffeinstellungen liegen bei 20 bis 40%. Die Dispergiermittelgehalte bei ca. 10 bis 40%. Bei Pulvereinstellungen liegen die Farbstoffgehalte bei 20 bis 60% und die Dispergiermittelgehalte bei 40 bis 80%. Aus ökonomischen Gründen wird ein Farbstoffgehalt von 20% meist nicht unterschritten.

Die erfindungsgemäßen Farbstoffmischungen sind als solche oder auch im Gemisch mit anderen Dispersionsfarbstoffen vorzüglich zum Färben und Bedrucken von hydrophoben synthetischen Fasermaterialien geeignet. Überraschenderweise sind sie den Einzelfarbstoffen im Hinblick auf färberisches Verhalten und coloristische Echtheiten, wie z.B. Thermomigration, Thermofixierechtheit, Wasser-, Wasch-und Reibechtheit, insbesondere im Aufbau- und Ausziehvermögen und im Egalisiervermögen, überlegen. Außerdem werden bei den erfindungsgemäßen Farbstoffmischungen auch bei einer Herabsetzung der Färbetemperaturen und Verkürzung der Färbezeit noch hervorragend farbstarke Färbungen bei ausgezeichneter Baderschöpfung erhalten.

Als hydrophobe synthetische Materialien kommen z.B. in Betracht: Cellulose-2$^1$/2-Acetat, Cellulosetriacetat, Polyamide und besonders hochmolekulare Polyester, wie z.B. Polyethylenglykolterephthalat und deren Mischungen mit natürlichen Faserstoffen, wie z.B. Baumwolle, regenerierte Cellulosefasern oder Wolle.

Zur Herstellung der Färbeflotten werden die erforderlichen Mengen der Farbstoffeinstellungen, die gemäß den obigen Angaben hergestellt wurden, mit dem Färbemedium, vorzugsweise mit Wasser, so weit verdünnt, daß sich für die Färbung ein Flottenverhältnis von 1 : 5 bis 1 : 50 ergibt.

Zusätzlich werden den Flotten im allgemeinen weitere Färbereihilfsmittel, wie Dispergier-, Netz- und Fixierhilfsmittel zugesetzt.

Soll der Farbstoff für den Textildruck herangezogen werden, so werden die erforderlichen Mengen der Farbstoffeinstellungen zusammen mit Verdickungsmitteln, wie z.B. Alkali-Alginaten oder dergleichen, und gegebenenfalls weiteren Zusätzen, wie z.B. Fixierbeschleunigern, Netzmitteln und Oxydationsmitteln, zu Druckpasten verknetet.

Die Erfindung wird durch die folgenden Beispiele näher erläutert:

Beispiel 1

14,7 g des Farbstoffs der Formel IX

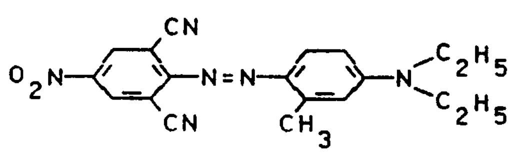

(IX)

9,5 g des Farbstoffs der Formel X

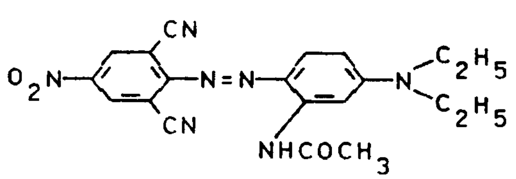

(X)

und

5,1 g des Farbstoffs der Formel XI

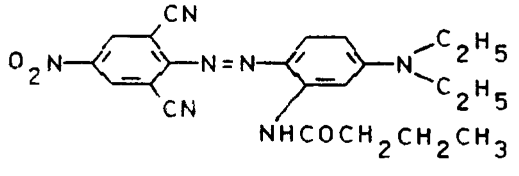

(XI)

werden gemeinsam mit 227,6 g Wasser, 86,8 g eines höher molekularen Ligninsulfonats und 6,3 g eines Arylpolyglykolethers mit einer Dissolverscheibe homogenisiert und der pH-Wert mit 2,6 ml 50%iger Essigsäure auf 8,0 gestellt. Anschließend wird dieser Anschlag in einer wassergekühlten Perlmühle bis zu einer Feinverteilung von < 5 µm gemahlen, der so erhaltene Mahlteig zur Abtrennung vom Mahlmittel gesiebt und danach mit einem Sprühtrocknet getrocknet.

1,25 g des so erhaltenen Farbstoffs werden in 2000 g Wasser dispergiert. Die Dispersion wird mit 4 g Ammoniumsulfat, 2 g eines handelsüblichen Dispergiermittels auf Basis eines Kondensationsproduktes aus Naphthalinsulfon säurenatriumsalz und Formaldehyd und 2 g eines Kondensationsprodukts aus m-Kresol, Formaldehyd und Natriumsulfit versetzt und mit Essigsäure auf einen pH-Wert von 5,5 gestellt. In die so erhaltene Färbeflotte bringt man 100 g eines texturierten Polyestergewebes auf Basis Polyethylenglykolterephthalat ein und färbt 1/2 Stunde bei 120 °C. Nach anschließendem Spülen, reduktiver Nachbehandlung mit einer 0,2%igen Natriumdithionitlösung während 15 Minuten bei 70 bis 80 °C, Spülen und Trocknen, erhält man eine farbstarke blaue Färbung mit hervorragenden coloristischen Eigenschaften.

Bringt man zur Herstellung eines Nachzugs in das Färbebad nochmals 100 g eines texturierten Polyestergewebes auf Basis Polyethylenglykolterephthalat ein und färbt 1 Stunde bei 135 °C und behandelt den Nachzug wie vorstehend bei der eigentlichen Färbung angegeben nach, so erhält man eine nahezu farblose Färbung.

Beispiel 2

Je 14,7 g der Farbstoffe der Formeln IX und XI werden gemeinsam in 243,7 g Wasser mit 43,6 g Natriumligninsulfonat und 12,6 g eines nichtionischen Dispergiermittels auf Basis Arylpolyglykolether (4-((4'-Benzyl-)phenyl)-phenol + 15AeO) mit 50%iger Essigsäure auf einen pH-Wert von 5,9 gestellt und mit dem Zackenrührer homogenisiert. Dann wird die erhaltene Dispersion im Autoklaven innerhalb von 2 Stunden auf 100 °C erwärmt und 2 Stunden bei dieser Temperatur gerührt. Nach dem Abkühlen werden 43,6 g eines Kondensationsproduktes aus Kresol, Formaldehyd und Naphthol-2-sulfonsäure-natrium-salz zugesetzt und die Dispersion mit 50%iger Essigsäure auf pH 8,0 gestellt. Anschließend wird 2 Stunden bei Raumtemperatur in der Perlmühle bis zur Feinverteilung (80% ≦ 1 µm) gemahlen, gesiebt und im Sprühtrockner gesprüht. Das so erhaltene Farbstoffpulver wird wie folge zum Färben eingesetzt.

0,12 g des so hergestellten Farbstoffpulvers werden in 250 ml Wasser eingerührt und unter Rühren mit 0,4 g eines handelsüblichen Dispergiermittels auf Basis eines Kondensationsprodukts aus m-Kresol, Formaldehyd und Natriumsulfit, 0,8 g eines handelsüblichen Carriers auf Basis von Methylnaphthalin, 0,8 g Natriumacetat krist. sowie 1,2 ml 30%ige Essigsäure versetzt und mit Wasser auf 400 ml aufgefüllt. Der pH-Wert des Färbebads beträgt 4,5. In dieses Färbebad werden 10 g eines Polyestergewebes auf Basis von Polyethylenglykolterephthalat eingebracht. Im offenen Gefäß wird 90 Minuten bei 95 °C gefärbt, das Färbegut herausgenommen, gespült, reduktiv mit alkalischer 0,2%iger Natriumdithionitlösung (15 Minuten bei 60 bis 70 °C) nachbehandelt, erneut gespült und getrocknet. Dabei wird eine farbstarke blaue Färbung mit hervorragenden coloristischen Eigenschaften erhalten.

Der bei 135 °C 1/2 Stunde gefärbte Nachzug ist fast farblos.

Beispiel 3

17,6 g des Farbstoffs der Formel IX und 11,7 g des Farbstoffs der Formel X werden wie in Beispiel 1 beschrieben in ein Farbstoffpulver überführt.

0,12 g des so hergestellten Farbstoffpulvers werden in 200 ml Wasser eingerührt und unter Rühren mit 0,2 g eines handelsüblichen Dispergiermittels auf Basis eines Kondensationsprodukts aus m-Kresol, Formaldehyd und Natriumsulfit, 0,3 g eines handelsüblichen Carriers auf Basis von Methylnaphthalin, 0,4 g Natriumacetat krist. sowie 1,2 ml 30%ige Essigsäure versetzt. Der pH-Wert des Färbebads beträgt 4,5. In dieses Färbebad werden 10 g eines Polyestergewebes auf Basis von Polyethylenglykolterephthalat eingebracht und in einer Färbebombe unter Druck eine Stunde bei 106 °C gefärbt. Man stellt, wie vorstehend beschrieben, durch Spülen, reduktive Nachbehandlung, erneutes Spülen und Trocknen fertig und und erhält ebenfalls eine farbstarke blaue Färbung mit sehr guten coloristischen Echtheiten.

In der nachstehenden Tabelle sind weitere erfindungsgemäße Farbstoffmischungen mit den Bedeutungen R, $R^1$ und $R^2$ und dem Gewichtsverhältnis der Einzelfarbstoffe angegeben, die nach den vorstehenden Angaben herstellbar sind und die auf Polyestermaterialien ebenfalls farbstarke blaue Färbungen bzw. Drucke mit ebenfalls sehr guten coloristischen Eigenschaften liefern.

| Beispiel | Farbstoff | $R^1$ | $R^2$ | R | Gewichtsverhältnis |
|---|---|---|---|---|---|
| 4 | I | $C_2H_5$ | $C_2H_5$ | $n-C_3H_7$ | 80 |
| | II | $C_2H_5$ | $C_2H_5$ | - | 20 |
| 5 | I | $C_2H_5$ | $C_2H_5$ | $CH_3$ | 20 |
| | I | $C_2H_5$ | $C_2H_5$ | $n-C_3H_7$ | 20 |
| | II | $C_2H_5$ | $C_2H_5$ | - | 60 |
| 6 | I | $C_2H_5$ | $C_2H_5$ | $C_2H_5$ | 50 |
| | II | $C_2H_5$ | $C_2H_5$ | - | 50 |
| 7 | I | $C_2H_5$ | $C_2H_5$ | $i-C_3H_7$ | 70 |
| | II | $C_2H_5$ | $C_2H_5$ | - | 30 |
| 8 | I | $C_2H_5$ | $C_2H_5$ | $CH_3$ | $33^1/3$ |
| | I | $C_2H_5$ | $C_2H_5$ | $i-C_3H_7$ | $33^1/3$ |
| | II | $C_2H_5$ | $C_2H_5$ | - | $33^1/3$ |
| 9 | I | $C_2H_5$ | $C_2H_5$ | $C_2H_5$ | 10 |
| | I | $C_2H_5$ | $C_2H_5$ | $n-C_3H_7$ | 40 |
| | II | $C_2H_5$ | $C_2H_5$ | - | 50 |
| 10 | I | $C_2H_5$ | $C_2H_5$ | $C_2H_5$ | 40 |
| | I | $C_2H_5$ | $C_2H_5$ | $i-C_3H_7$ | 40 |
| | II | $C_2H_5$ | $C_2H_5$ | - | 20 |

| Beispiel | Farbstoff | $R^1$ | $R^2$ | R | Gewichtsverhältnis |
|---|---|---|---|---|---|
| 11 | I | $C_2H_5$ | $C_2H_5$ | $CH_3$ | 20 |
| | I | $C_2H_5$ | $C_2H_5$ | $C_2H_5$ | 20 |
| | II | $C_2H_5$ | $C_2H_5$ | - | 60 |
| 12 | I | $C_2H_5$ | $C_2H_5$ | $n-C_3H_7$ | 30 |
| | I | $C_2H_5$ | $C_2H_5$ | $i-C_3H_7$ | 30 |
| | II | $C_2H_5$ | $C_2H_5$ | - | 40 |
| 13 | I | $C_2H_5$ | $C_2H_5$ | $CH_3$ | 20 |
| | I | $C_2H_5$ | $C_2H_5$ | $n-C_3H_7$ | 20 |
| | I | $C_2H_5$ | $C_2H_5$ | $i-C_3H_7$ | 20 |
| | II | $C_2H_5$ | $C_2H_5$ | - | 40 |
| 14 | I | $C_2H_5$ | $C_2H_5$ | $CH_3$ | 10 |
| | I | $n-C_3H_7$ | $n-C_3H_7$ | $CH_3$ | 30 |
| | II | $C_2H_5$ | $C_2H_5$ | - | 60 |
| 15 | I | $C_2H_5$ | $C_2H_5$ | $CH_3$ | 20 |
| | I | $n-C_3H_7$ | $n-C_3H_7$ | $CH_3$ | 20 |
| | II | $C_2H_5$ | $C_2H_5$ | - | 60 |
| 16 | I | $C_2H_5$ | $C_2H_5$ | $CH_3$ | 35 |
| | I | $n-C_3H_7$ | $n-C_3H_7$ | $CH_3$ | 35 |
| | II | $C_2H_5$ | $C_2H_5$ | - | 30 |

| Beispiel | Farbstoff | $R^1$ | $R^2$ | R | Gewichtsverhältnis |
|---|---|---|---|---|---|
| 17 | I | $C_2H_5$ | $C_2H_5$ | $C_2H_5$ | 40 |
| | I | $n-C_3H_7$ | $n-C_3H_7$ | $C_2H_5$ | 20 |
| | II | $C_2H_5$ | $C_2H_5$ | - | 40 |
| 18 | I | $C_2H_5$ | $C_2H_5$ | $n-C_3H_7$ | 60 |
| | I | $n-C_3H_7$ | $n-C_3H_7$ | $n-C_3H_7$ | 10 |
| | II | $C_2H_5$ | $C_2H_5$ | - | 30 |
| 19 | I | $C_2H_5$ | $C_2H_5$ | $n-C_3H_7$ | 30 |
| | I | $n-C_3H_7$ | $n-C_3H_7$ | $CH_3$ | 30 |
| | II | $C_2H_5$ | $C_2H_5$ | - | 40 |
| 20 | I | $C_2H_5$ | $C_2H_5$ | $C_2H_5$ | 60 |
| | I | $n-C_3H_7$ | $n-C_3H_7$ | $CH_3$ | 30 |
| | II | $C_2H_5$ | $C_2H_5$ | - | 10 |
| 21 | I | $C_2H_5$ | $C_2H_5$ | $i-C_3H_7$ | 30 |
| | I | $n-C_3H_7$ | $n-C_3H_7$ | $CH_3$ | 30 |
| | II | $C_2H_5$ | $C_2H_5$ | - | 40 |
| 22 | I | $n-C_3H_7$ | $n-C_3H_7$ | $CH_3$ | 40 |
| | II | $C_2H_5$ | $C_2H_5$ | - | 60 |
| 23 | I | $n-C_3H_7$ | $n-C_3H_7$ | $CH_3$ | 25 |
| | II | $C_2H_5$ | $C_2H_5$ | - | 75 |

| Beispiel | Farbstoff | $R^1$ | $R^2$ | R | Gewichtsverhältnis |
|---|---|---|---|---|---|
| 24 | I | $n-C_3H_7$ | $n-C_3H_7$ | $n-C_3H_7$ | 50 |
| | II | $C_2H_5$ | $C_2H_5$ | - | 50 |
| 25 | I | $n-C_3H_7$ | $n-C_3H_7$ | $C_2H_5$ | 65 |
| | II | $C_2H_5$ | $C_2H_5$ | - | 35 |
| 26 | I | $n-C_3H_7$ | $n-C_3H_7$ | $i-C_3H_7$ | 40 |
| | II | $C_2H_5$ | $C_2H_5$ | - | 60 |
| 27 | I | $n-C_3H_7$ | $n-C_3H_7$ | $n-C_3H_7$ | 10 |
| | I | $C_2H_5$ | $C_2H_5$ | $n-C_3H_7$ | 15 |
| | I | $n-C_3H_7$ | $n-C_3H_7$ | $CH_3$ | 10 |
| | I | $C_2H_5$ | $C_2H_5$ | $CH_3$ | 10 |
| | II | $C_2H_5$ | $C_2H_5$ | - | 55 |
| 28 | I | $n-C_4H_9$ | $n-C_4H_9$ | $CH_3$ | 50 |
| | II | $C_2H_5$ | $C_2H_5$ | - | 50 |
| | I | $n-C_4H_9$ | $n-C_4H_9$ | $C_2H_5$ | 45 |
| 29 | II | $C_2H_5$ | $C_2H_5$ | - | 55 |
| | I | $C_2H_5$ | $C_2H_5$ | $CH_3$ | 30 |
| 30 | I | $n-C_4H_9$ | $n-C_4H_9$ | $CH_3$ | 10 |
| | II | $C_2H_5$ | $C_2H_5$ | - | 60 |

| Beispiel | Farbstoff | $R^1$ | $R^2$ | R | Gewichtsverhältnis |
|---|---|---|---|---|---|
| 31 | I | $n-C_4H_9$ | $n-C_4H_9$ | $CH_3$ | 5 |
| | I | $C_2H_5$ | $C_2H_5$ | $n-C_3H_7$ | 55 |
| | II | $C_2H_5$ | $C_2H_5$ | - | 40 |
| 32 | I | $n-C_5H_{11}$ | $n-C_5H_{11}$ | $CH_3$ | 30 |
| | II | $C_2H_5$ | $C_2H_5$ | - | 70 |
| 33 | I | $n-C_6H_{13}$ | $n-C_6H_{13}$ | $CH_3$ | 25 |
| | II | $C_2H_5$ | $C_2H_5$ | - | 75 |
| 34 | I | $C_2H_5$ | $C_2H_5$ | $n-C_3H_7$ | 45 |
| | II | $n-C_3H_7$ | $n-C_3H_7$ | - | 55 |
| 35 | I | $C_2H_5$ | $C_2H_5$ | $CH_3$ | 70 |
| | II | $n-C_3H_7$ | $n-C_3H_7$ | - | 30 |
| 36 | I | $C_2H_5$ | $C_2H_5$ | $CH_3$ | 30 |
| | I | $C_2H_5$ | $C_2H_5$ | $n-C_3H_7$ | 10 |
| | II | $C_2H_5$ | $C_2H_5$ | - | 60 |
| 37 | I | $C_2H_5$ | $C_2H_5$ | $C_2H_5$ | 60 |
| | II | $n-C_3H_7$ | $n-C_3H_7$ | - | 40 |
| 38 | I | $C_2H_5$ | $C_2H_5$ | $i-C_3H_7$ | 50 |
| | II | $n-C_3H_7$ | $n-C_3H_7$ | - | 50 |

| Beispiel | Farbstoff | $R^1$ | $R^2$ | R | Gewichtsverhältnis |
|---|---|---|---|---|---|
| 39 | I | $n-C_3H_7$ | $n-C_3H_7$ | $CH_3$ | 20 |
| | II | $n-C_3H_7$ | $n-C_3H_7$ | - | 80 |
| 40 | I | $C_2H_5$ | $C_2H_5$ | $CH_3$ | 25 |
| | I | $n-C_3H_7$ | $n-C_3H_7$ | $CH_3$ | 25 |
| | II | $n-C_3H_7$ | $n-C_3H_7$ | - | 50 |
| 41 | I | $C_2H_5$ | $C_2H_5$ | $CH_3$ | 30 |
| | I | $C_2H_5$ | $C_2H_5$ | $i-C_3H_7$ | 40 |
| | II | $n-C_3H_7$ | $n-C_3H_7$ | - | 30 |
| 42 | I | $C_2H_5$ | $C_2H_5$ | $CH_3$ | 30 |
| | I | $C_2H_5$ | $C_2H_5$ | $C_2H_5$ | 30 |
| | II | $n-C_3H_7$ | $n-C_3H_7$ | - | 40 |
| 43 | I | $C_2H_5$ | $C_2H_5$ | $n-C_3H_7$ | 70 |
| | II | $n-C_4H_9$ | $n-C_4H_9$ | - | 30 |
| 44 | I | $C_2H_5$ | $C_2H_5$ | $CH_3$ | 45 |
| | II | $n-C_4H_9$ | $n-C_4H_9$ | - | 55 |
| 45 | I | $C_2H_5$ | $C_2H_5$ | $CH_3$ | 25 |
| | I | $C_2H_5$ | $C_2H_5$ | $n-C_3H_7$ | 50 |
| | II | $n-C_4H_9$ | $n-C_4H_9$ | - | 25 |

| Beispiel | Farbstoff | $R^1$ | $R^2$ | R | Gewichtsverhältnis |
|---|---|---|---|---|---|
| 46 | I | $C_2H_5$ | $C_2H_5$ | $CH_3$ | 30 |
| | I | $C_2H_5$ | $C_2H_5$ | $n\text{-}C_3H_7$ | 30 |
| | II | $n\text{-}C_5H_{11}$ | $n\text{-}C_5H_{11}$ | - | 40 |
| 47 | I | $C_2H_5$ | $C_2H_5$ | $CH_3$ | 65 |
| | I | $n\text{-}C_3H_7$ | $n\text{-}C_3H_7$ | $CH_3$ | 15 |
| | II | $n\text{-}C_6H_{13}$ | $n\text{-}C_6H_{13}$ | - | 20 |
| 48 | I | $CH_3$ | $CH_3$ | $C_2H_5$ | 50 |
| | II | $C_2H_5$ | $C_2H_5$ | - | 50 |
| 49 | I | $CH_3$ | $CH_3$ | $n\text{-}C_3H_7$ | 35 |
| | II | $C_2H_5$ | $C_2H_5$ | - | 65 |
| 50 | I | $CH_3$ | $CH_3$ | $CH_3$ | $33^1/3$ |
| | I | $CH_3$ | $CH_3$ | $n\text{-}C_3H_7$ | $33^1/3$ |
| | II | $CH_3$ | $CH_3$ | - | $33^1/3$ |
| 51 | I | $C_2H_5$ | $C_2H_5$ | $n\text{-}C_3H_7$ | 75 |
| | II | $CH_3$ | $CH_3$ | - | 25 |
| 52 | I | $C_2H_5$ | $C_2H_5$ | $CH_3$ | 30 |
| | II | $C_2H_5$ | $C_2H_5$ | - | 35 |
| | II | $n\text{-}C_3H_7$ | $n\text{-}C_3H_7$ | - | 35 |

| Beispiel | Farbstoff | $R^1$ | $R^2$ | R | Gewichtsverhältnis |
|---|---|---|---|---|---|
| 53 | I | $C_2H_5$ | $C_2H_5$ | $C_2H_5$ | 30 |
| | II | $C_2H_5$ | $C_2H_5$ | - | 45 |
| | II | $n\text{-}C_4H_9$ | $n\text{-}C_4H_9$ | - | 25 |
| 54 | I | $C_2H_5$ | $C_2H_5$ | $n\text{-}C_3H_7$ | 50 |
| | II | $n\text{-}C_3H_7$ | $n\text{-}C_3H_7$ | - | 25 |
| | II | $n\text{-}C_4H_9$ | $n\text{-}C_4H_9$ | - | 25 |
| 55 | I | $C_2H_5$ | $C_2H_5$ | $n\text{-}C_3H_7$ | 35 |
| | II | $CH_3$ | $CH_3$ | - | 30 |
| | II | $C_2H_5$ | $C_2H_5$ | - | 35 |
| 56 | I | $C_2H_5$ | $C_2H_5$ | $n\text{-}C_3H_7$ | 20 |
| | II | $C_2H_5$ | $C_2H_5$ | - | 40 |
| | II | $n\text{-}C_3H_7$ | $n\text{-}C_3H_7$ | - | 40 |
| 57 | I | $C_2H_5$ | $C_2H_5$ | $C_2H_5$ | 25 |
| | II | $C_2H_5$ | $C_2H_5$ | - | 50 |
| | II | $n\text{-}C_3H_7$ | $n\text{-}C_3H_7$ | - | 25 |
| 58 | I | $C_2H_5$ | $C_2H_5$ | $i\text{-}C_3H_7$ | 50 |
| | II | $CH_3$ | $CH_3$ | - | 25 |
| | II | $n\text{-}C_4H_9$ | $n\text{-}C_4H_9$ | - | 25 |
| 59 | I | $C_2H_5$ | $n\text{-}C_3H_7$ | $CH_3$ | $33^1/3$ |
| | II | $C_2H_5$ | $C_2H_5$ | - | $66^2/3$ |

| Beispiel | Farbstoff | $R^1$ | $R^2$ | R | Gewichtsverhältnis |
|---|---|---|---|---|---|
| 60 | I | $CH_3$ | $n\text{-}C_4H_9$ | $C_2H_5$ | 50 |
| | II | $C_2H_5$ | $C_2H_5$ | - | 50 |
| 61 | I | $CH_3$ | $n\text{-}C_3H_7$ | $n\text{-}C_3H_7$ | 45 |
| | II | $C_2H_5$ | $C_2H_5$ | - | 55 |
| 62 | I | $C_2H_5$ | $C_2H_5$ | $CH_3$ | 40 |
| | II | $C_2H_5$ | $n\text{-}C_3H_7$ | - | 60 |
| 63 | I | $C_2H_5$ | $C_2H_5$ | $C_2H_5$ | 50 |
| | II | $CH_3$ | $n\text{-}C_3H_7$ | - | 50 |
| 64 | I | $C_2H_5$ | $i\text{-}C_3H_7$ | $CH_3$ | 30 |
| | II | $C_2H_5$ | $C_2H_5$ | - | 70 |
| 65 | I | $C_2H_5$ | $i\text{-}C_3H_7$ | $n\text{-}C_3H_7$ | 35 |
| | II | $C_2H_5$ | $C_2H_5$ | - | 65 |
| 66 | I | $CH_3$ | $i\text{-}C_3H_7$ | $C_2H_5$ | 50 |
| | II | $n\text{-}C_3H_7$ | $n\text{-}C_3H_7$ | - | 50 |
| 67 | I | $C_2H_5$ | $C_2H_5$ | $CH_3$ | 40 |
| | II | $CH_3$ | $i\text{-}C_3H_7$ | - | 60 |
| 68 | I | $n\text{-}C_3H_7$ | $n\text{-}C_3H_7$ | $CH_3$ | 35 |
| | II | $C_2H_5$ | $i\text{-}C_3H_7$ | - | 65 |

| Beispiel | Farbstoff | $R^1$ | $R^2$ | R | Gewichtsverhältnis |
|---|---|---|---|---|---|
| 69 | I | $C_2H_5$ | $i-C_3H_7$ | $C_2H_5$ | 60 |
| | II | $C_2H_5$ | $i-C_3H_7$ | - | 40 |
| 70 | I | $C_2H_5$ | $i-C_3H_7$ | $CH_3$ | 4o |
| | I | $C_2H_5$ | $i-C_3H_7$ | $n-C_3H_7$ | 4o |
| | II | $C_2H_5$ | $i-C_3H_7$ | - | 20 |
| 71 | I | $CH_3$ | $i-C_4H_9$ | $C_2H_5$ | $33^1/3$ |
| | II | $CH_3$ | $i-C_4H_9$ | - | $33^1/3$ |
| | II | $C_2H_5$ | $i-C_4H_9$ | - | $33^1/3$ |
| 72 | I | $C_2H_5$ | $C_2H_5$ | $n-C_3H_7$ | 50 |
| | II | $CH_3$ | $i-C_5H_{11}$ | - | 50 |

**Patentansprüche**

**1.** Mischungen von Monoazofarbstoffen, dadurch gekennzeichnet, daß sie einen oder mehrere Farbstoffe der Formel I

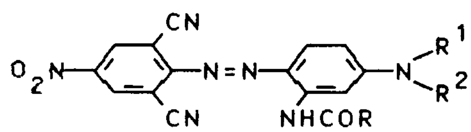

(I)

und einen oder mehrere Farbstoffe der Formel II

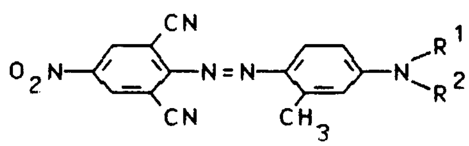

(II)

worin
$R^1$ und $R^2$ unabhängig voneinander lineares oder verzweigtes Alkyl mit 1 bis 6 C-Atomen und R lineares oder verzweigtes Alkyl mit 1 bis 3 C-Atomen bedeuten, enthalten.

**2.** Farbstoffmischung nach Anspruch 1, dadurch gekennzeichnet, daß der Gewichtsanteil eines Farbstoffs der Formeln I bzw. II 10 bis 90%, vorzugsweise 30 bis 70%, beträgt und/oder daß sie je einen oder zwei Farbstoffe der Formeln I und II enthält.

**3.** Farbstoffmischung nach Anspruch 1 und/oder 2, dadurch gekennzeichnet, daß $R^1$ und $R^2$ lineares Alkyl mit 2 bis 4 C-Atomen, und R Alkyl mit 1 bis 3 C-Atomen, bedeuten.

**4.** Farbstoffmischung nach einem oder mehreren der Ansprüche 1 bis 3, dadurch gekennzeichnet, daß sie aus Farbstoffen der Formeln I und II besteh, wobei $R^1$ und $R^2$ in einem Farstoff jeweils identisch sind und n-Propyl und insbesondere Ethyl bedeuten und die einen oder mehrere Farbstoffe der Formel I enthält, in denen R gleich Methyl, i-Propyl und insbesondere n-Propyl bedeutet.

**5.** Farbstoffmischung nach einem oder mehreren der Ansprüche 1 bis 4, dadurch gekennzeichnet, daß sie mindestens zwei Farbstoffe der Formel I enthält, bei denen die Reste R unterschiedlich sind und zwei dieser Farbstoffe für R die Kombinationen Methyl/i-Propyl, Ethyl/i-Propyl, Ethyl/n-Propyl, i-Propyl/n-Propyl und insbesondere Methyl/n-Propyl haben, wobei die Reste $R^1$ und $R^2$ bevorzugt an jedem einzelnen Farbstoff gleich sind und ganz besonders bevorzugt Ethyl bedeuten.

**6.** Farbstoffmischung nach einem oder mehreren der Ansprüche 1 bis 5, dadurch gekennzeichnet, daß sie mindestens zwei Farbstoffe der Formel I enthält, bei denen die Reste R jeweils gleich sind und Ethyl, n-Propyl, i-Propyl und insbesondere Methyl bedeuten, und die Reste $R^1$ und $R^2$, die an jedem einzelnen Farbstoff gleich sind, sich von Farbstoff zu Farbstoff unterscheiden und die Kombinationen Ethyl/n-Butyl, Propyl/n-Butyl und insbesondere Ethyl/n-Propyl haben.

**7.** Farbstoffmischung nach einem oder mehreren der Ansprüche 1 bis 6, dadurch gekennzeichnet, daß sie den Farbstoff der Formel II mit $R^1 = R^2 =$ Ethyl sowie die Farbstoffe der Formel I mit $R^1 = R^2 =$ Ethyl und R = Methyl bzw. n-Propyl oder die Farbstoffe der Formel I mit R = Methyl und $R^1 = R^2 =$ Ethyl bzw. n-Propyl oder insbesondere den Farbstoff der Formel I mit $R^1 = R^2 =$ Ethyl und R = n-Propyl enthält.

**8.** Verfahren zur Herstellung der in einem oder mehreren der Ansprüche 1 bis 7 genannten Farbstoffmischungen, dadurch gekennzeichnet, daß

a) mindestens ein Einzelfarbstoff der Formel I mit mindestens einem Einzelfarbstoff der Formel II gemischt wird,

b) ein Amin der Formel III

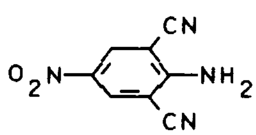

(III)

in diazotierter Form auf eine Mischung aus jeweils mindenstens einer Kupplungskomponente der Formeln IV bzw. V

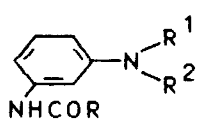

(IV)

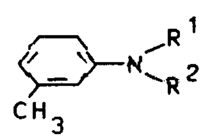

(V)

gekuppelt wird oder

c) daß in Farbstoffmischungen, die aus jeweils mindestens einem Farbstoff der Formeln VI bzw. VII

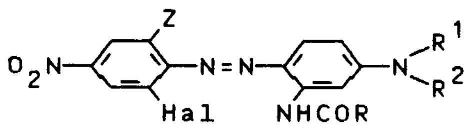

(VI)

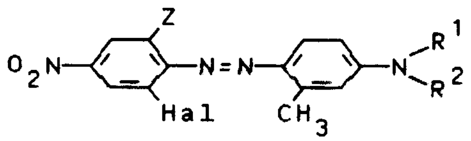

(VII)

bestehen, worin Z für Cyan oder Halogen und Hal für Halogen steht, in an sich bekannter Weise Halogen gegen Cyan ausgetauscht wird, wobei R, $R^1$ und $R^2$ die in Anspruch 1 genannten Bedeutungen besitzen, und die Farbstoffmischung gegebenenfalls in eine Farbstoffzubereitung überführt wird.

**9.** Verfahren zur Herstellung der in einem oder mehreren der Ansprüche 1 bis 7 genannten Farbstoffmischungen, dadurch gekennzeichnet, daß eine Mischung aus jeweils mindestens einem Farbstoff der Formeln I und II umkristallisiert oder gelöst und gefällt oder in Wasser bei Temperaturen von 70 bis 150 °C, vorzugsweise 90 bis 130 °C, in Gegenwart eines oder mehrerer Dispergiermittel oder eines organischen Lösungsmittels erhitzt wird und gegebenenfalls in eine Farbstoffzubereitung überführt wird.

**10.** Verfahren zum Färben und Bedrucken von hydrophoben Fasermaterialien sowie deren Mischungen mit Naturfasern oder Regeneratcellulosefasern, dadurch gekennzeichnet, daß eine Farbstoffmischung nach einem oder mehreren der Ansprüche 1 bis 7 als solche, oder auch im Gemisch mit anderen Dispersionsfarbstoffen verwendet wird.

## Claims

**1.** Mixtures of monoazo dyestuffs, characterized in that they contain one or more dyestuffs of the formula I

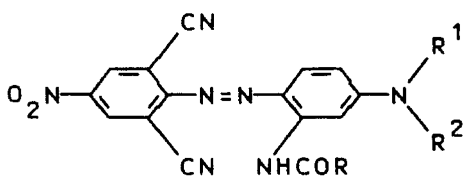

(I)

and one or more dyestuffs of the formula II

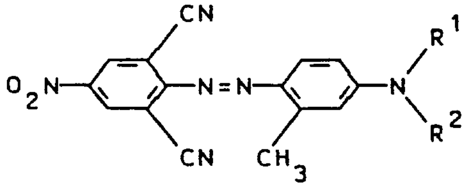

(II)

wherein $R^1$ and $R^2$ independently of one another denote linear or branched alkyl with 1 to 6 C atoms and R denotes linear or branched alkyl with 1 to 3 C atoms.

**2.** Dyestuff mixture according to Claim 1, characterized in that the weight proportion of a dyestuff of the formula I or II is 10 to 90 %, preferably 30 to 70 %, and in that it contains one or two dyestuffs each of the formula I and II.

**3.** Dyestuff mixture according to Claim 1 and/or 2, characterized in that $R^1$ and $R^2$ denote linear alkyl with 2 to 4 C atoms and R denotes alkyl with 1 to 3 C atoms.

**4.** Dyestuff mixture according to one or more of Claims 1 to 3, characterized in that it consists of dyestuffs of the formula I and II, wherein $R^1$ and $R^2$ in one dyestuff are in each case identical and denote n-propyl and, in particular, ethyl, and which contains one or more dyestuffs of the formula I in which R denotes methyl, i-propyl or, in particular, n-propyl.

**5.** Dyestuff mixture according to one or more of Claims 1 to 4, characterized in that it contains at least two dyestuffs of the formula I in which the radicals R are different and two of these dyestuffs have the combinations methyl/i-propyl, ethyl/i-propyl, ethyl/n-propyl, i-propyl/n-propyl and, in particular methyl/n-propyl for R, the radicals $R^1$ and $R^2$ preferably being identical on each individual dyestuff and especially preferably denoting ethyl.

**6.** Dyestuff mixture according to one or more of Claims 1 to 5, characterized in that it contains at least two dyestuffs of the formula I in which the radicals R are in each case identical and denote ethyl, n-propyl, i-propyl and, in particular, methyl and the radicals $R^1$ and $R^2$, which are identical on each individual dyestuff, differ from dyestuff to dyestuff and have the combinations ethyl/n-butyl, propyl/n-butyl and, in particular, ethyl/n-propyl.

**7.** Dyestuff mixture according to one or more of Claims 1 to 6, characterized in that it contains the dyestuff of the formula II where $R^1 = R^2 =$ ethyl and the dyestuffs of the formula I where $R^1 = R^2 =$ ethyl and R = methyl or n-propyl, or the dyestuffs of the formula I where R = methyl and $R^1 = R^2 =$ ethyl or n-propyl or, in particular, the dyestuff of the formula I where $R^1 = R^2 =$ ethyl and R = n-propyl.

**8.** Process for the preparation of the dyestuff mixtures mentioned in one or more of Claims 1 to 7, characterized in that a) at least one individual dyestuff of the formula I is mixed with at least one individual dyestuff of the formula II, b) an amine of the formula III

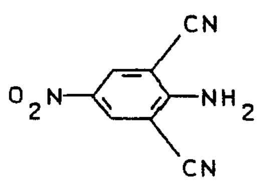

(III)

is coupled in diazotized form to a mixture of in each case at least one coupling component of the formulae IV and V

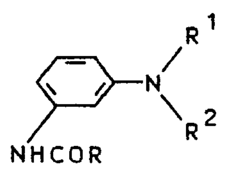

(IV)

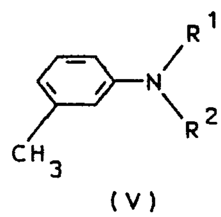

(V)

or
c) in dyestuff mixtures which consist of in each case at least one dyestuff of the formulae VI and VII

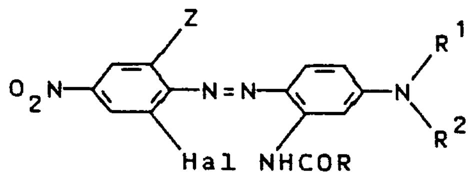

(VI)

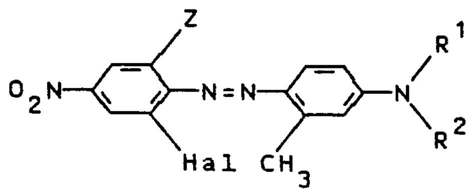

(VII)

wherein Z represents cyano or halogen and Hal represents halogen, halogen is exchanged for cyano in a manner which is known per se , R, $R^1$ and $R^2$ having the meanings given in Claim 1 and, if appropriate, the dyestuff mixture is converted into a dyestuff formulation.

**9.** Process for the preparation of the dyestuff mixtures mentioned in one or more of Claims 1 to 7, characterized in that a mixture of in each case at least one dyestuff of the formulae I and II is recrystallized or dissolved and precipitated or heated in water at temperatures of 70 to 150 °C, preferably 90 to 130 °C, in the presence of one or more dispersing agents or an organic solvent, and, if appropriate, is converted into a dyestuff formulation.

**10.** Process for dyeing and printing hydrophobic fibre materials and mixtures thereof with natural fibres or regenerated cellulose fibres, characterized in that a dyestuff mixture according to one or more of Claims 1 to 7 is used as such or as a mixture with other disperse dyestuffs.

**Revendications**

**1.** Mélanges de colorants monoazoïques caractérisés en ce qu'ils comprennent un ou plusieurs colorants de formule I

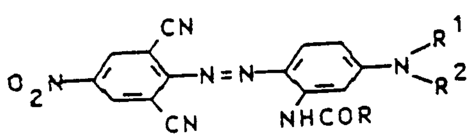

(I)

et un ou plusieurs colorants de formule II

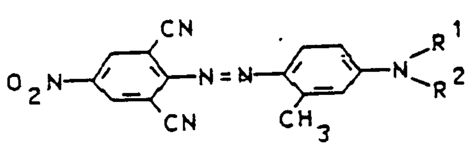

(II)

formules dans lesquelles

| | |
|---|---|
| $R^1$ et $R^2$ | désignent chacun, indépendamment l'un de l'autre, un alkyle à chaîne linéaire ou ramifiée pouvant avoir de 1 à 6 atomes de carbone et |
| R | désigne un alkyle linéaire ou ramifié pouvant avoir de 1 à 3 atomes de carbone. |

**2.** Mélange de colorants selon la revendication 1, caractérisé en ce que la proportion pondérale d'un colorant de formule I ou II est de 10 à 80 %, de préférence de 30 à 70 %, et/ou en ce qu'il comprend un ou deux colorants de formule I et un ou deux colorants de formule II.

3. Mélange de colorants selon la revendication 1 et/ou 2, caractérisé en ce que $R^1$ et $R^2$ sont des alkyles linéaires ayant de 2 à 4 atomes de carbone et R est un alkyle ayant de 1 à 3 atomes de carbone.

4. Mélange de colorants selon une ou plusieurs des revendications 1 à 3, caractérisé en ce qu'il est formé de colorants de formules I et II dans lesquels $R^1$ et $R^2$ sont chaque fois identiques dans un même colorant et sont le groupe n-propyle, en particulier éthyle, et en ce qu'il contient un ou plusieurs colorants de formule I dans lesquels R est le groupe méthyle ou i-propyle ou en particulier n-propyle.

5. Mélange de colorants selon une ou plusieurs des revendications 1 à 4, caractérisé en ce qu'il comprend au moins deux colorants de formule I dans lesquels les radicaux R sont différents et deux de ces colorants ont, en ce qui concerne R, l'association méthyle/i-propyle, éthyle/i-propyle, éthyle/n-propyle ou i-propyle/n-propyle, et en particulier méthyle/n-propyle, et les radicaux $R^1$ et $R^2$ sont de préférence les mêmes sur chaque colorant individuel et sont tout spécialement le groupe éthyle.

6. Mélange de colorants selon une ou plusieurs des revendications 1 à 5, caractérisé en ce qu'il comprend au moins deux colorants de formule I dans lesquels les radicaux R sont les mêmes et sont le groupe éthyle, n-propyle, i-propyle ou en particulier méthyle, et les radicaux $R^1$ et $R^2$, qui sont identiques sur chaque colorant individuel, diffèrent d'un colorant à l'autre, et présentent l'association éthyle/n-butyle, propyle/n-butyle ou en particulier éthyle/n-propyle.

7. Mélange de colorants selon une ou plusieurs des revendications 1 à 6, caractérisé en ce qu'il contient le colorant de formule II avec $R^1 = R^2$ = éthyle et les colorants de formule I avec $R^1 = R^2$ = éthyle et R = méthyle ou n-propyle, ou bien les colorants de formule I avec R = méthyle et $R^1 = R^2$ = éthyle ou n-propyle, ou en particulier le colorant de formule I avec $R^1 = R^2$ = éthyle et R = n-propyle.

8. Procédé de préparation des mélanges de colorants suivant une ou plusieurs des revendications 1 à 7, caractérisé en ce que :
   a) on mélange un ou plusieurs colorants de formule I avec un ou plusieurs colorants de formule II, ou bien
   b) on copule une amine de formule III

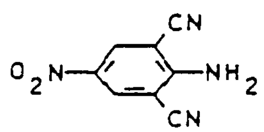

(III)

   diazotée sur un mélange constitué d'une ou plusieurs composantes de copulation de formule IV et d'une ou plusieurs composantes de copulation de formule V

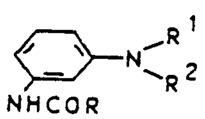

(IV)

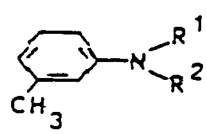

(V)

   ou encore
   c) dans des mélanges de colorants constitués d'un ou plusieurs colorants de formule VI et d'un ou plusieurs colorants de formule VII

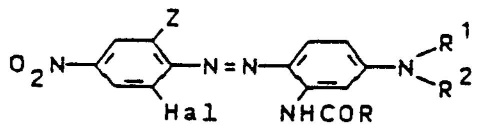

(VI)

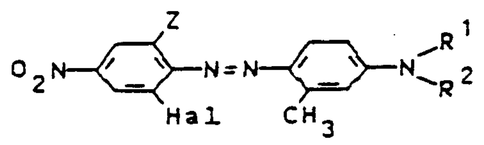

(VII)

Z désignant le groupe cyano ou un halogène et Hal un halogène, on échange de manière connue l'halogène contre le groupe cyano, les symboles R, $R^1$ et $R^2$ ayant les significations qui ont été indiquées à la revendication 1, et on forme éventuellement une préparation tinctoriale avec ce mélange de colorants.

**9.** Procédé de préparation des mélanges de colorants selon une ou plusieurs des revendications 1 à 7, procédé caractérisé en ce que l'on fait recristalliser un mélange de chaque fois un ou plusieurs colorants de formules I et II ou bien on le dissout et on le reprécipite ou on le chauffe dans de l'eau à des températures de 70 à 150 ° C, de préférence de 90 à 130 ° C, en présence d'un ou plusieurs dispersants ou d'un solvant organique, et le cas échéant on en forme une préparation tinctoriale.

**10.** Procédé de teinture et d'impression de matières fibreuses hydrophobes ou de leurs mélanges avec des fibres naturelles ou des fibres de cellulose régénérée, procédé caractérisé en ce que l'on utilise pour cela un mélange de colorants suivant une ou plusieurs des revendications 1 à 7, tel quel ou en mélange avec d'autres colorants de dispersion.